Europäisches Patentamt

(19) European Patent Office

Office européen des brevets

(11) Publication number: **0 010 073**
**B1**

(12) **EUROPEAN PATENT SPECIFICATION**

(45) Date of publication of patent specification: **27.10.82**

(21) Application number: **79850068.2**

(22) Date of filing: **12.07.79**

(51) Int. Cl.³: **F 16 B 2/06** //F16L3/10, F16L3/24

(54) **A mounting clip for holding pipes and similar fittings to be fixed to structures.**

(30) Priority: **27.09.78 JP 118758/78**

(43) Date of publication of application:
**16.04.80 Bulletin 80/8**

(45) Publication of the grant of the patent:
**27.10.82 Bulletin 82/43**

(84) Designated Contracting States:
**BE CH DE FR GB IT NL SE**

(56) References cited:
**DE - B - 1 251 093**
**US - A - 3 139 261**
**US - A - 3 301 514**

(73) Proprietor: **NEGUROSU ELECTRICAL INDUSTRIES CO., LTD.**
**Representative Masao Sugaya No. 1-3-5, Chuo, Edogawa-ku**
**Tokyo 132 (JP)**

(72) Inventor: **Kumakura, Masaaki**
**c/o Buresto Kogyo Kenkusho Co., Ltd.**
**No. 1-3-3, Chuo, Edogawa-ku Tokyo (JP)**

(74) Representative: **Barnieske, Hans Wolfgang et al,**
**S:ta Ragnhildsgatan 24-26 P.O. Box 68**
**S-151 21 Sodertalje (SE)**

Courier Press, Leamington Spa, England.

A mounting clip for holding pipes and similar fittings to be fixed to structures

The invention relates to a mounting clip for holding pipes and similar fittings to be fixed to structures of the kind referred to in the preamble of claim 1.

US Patent Specification 3 301 514 discloses a clip comprising two wriggly strip members one end of which having a coupling element and the other end having an abutment intended to cooperate with a circular bore of a supporting plate. This clip requires two strip pieces of different configuration which are inconvenient and costly to manufacture. The abutment is intended to engage in a circular bore of a supporting plate.

US Patent Specification 3 139 261 discloses a mounting clip comprising equally formed strip members, one end of which having securing or anchoring means, such as slots and the other end of which having coupling elements adapted to be locked with each other in use. Each coupling element comprises a detention bore of substantially triangular shape and an externally projecting locking lug located at the base of the detention bore.

These prior art clips or clamps have to be used with especially arranged means, such as a circular bore or engaging lugs on a supporting structure, which means that the supporting structure has to resist the strain applied when the clip or clamp is in its locked position.

One object of the present invention is to obtain a mounting clip for convenient, smooth and rapid engaging operation of the clip with a supporting structure with an increased working efficiency.

The object of this invention is obtained by a mounting clip which has been given the features stated in the appended claim 1.

The mounting clip according to this invention can be used to conveniently fix a pipe or a conduit to a desired position on a steel beam or angle in a short time and with a simple operation.

One way of carrying out the invention is described in detail below with reference to drawings which illustrate preferred embodiments, in which:

Figure 1 is a perspective view of two strip members of a mounting clip according to the invention;

Figure 2 is a perspective view of a linking loop of a mounting clip according to the invention;

Figure 3 is a lateral view of a mounting clip according to the invention in a closed position for clamping a pipe shown in section; and

Figure 4 is a lateral view of another mounting clip according to the invention in a closed position for clamping a pipe shown in section.

The mounting clip 10 according to the invention comprises two wriggly strip members 12, 12 and an associated linking loop 32.

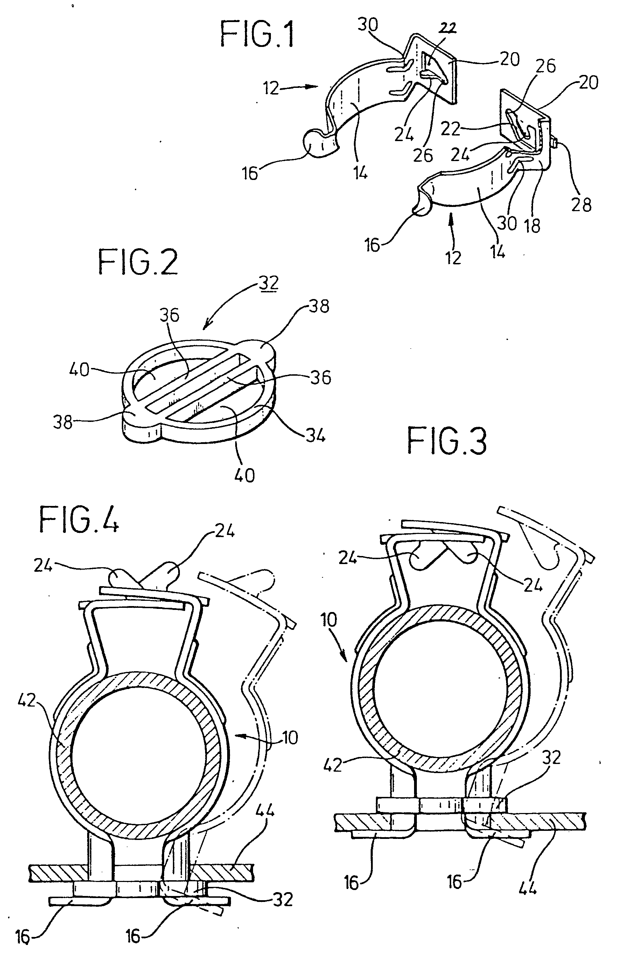

In Figure 1 the two wriggly strip members 12, 12 of substantially the same structure and configuration are shown which strip member includes an arm portion 14 having at its one end a base tongue 16 and at its opposite end a stem portion 18 contiguous with a coupling element 20. The coupling element 20 comprises a detention bore 22 of substantially trapezoidal form and a locking lug 24 projecting externally from the base of the trapezoidal detention bore 22 which includes a tip corner portion 26 for receiving the locking lug 24 of the other strip member when two strip members 12, 12 are interlocked with one another. It will be appreciated that two detention bores 22, 22 when two strip members 12, 12 are confronted to provide a clip are positioned unsymmetrically, so that the locking lug 24 is smoothly received into the tip corner portion 26 of the detention bore 22 when the clamping operation is carried out. On the boundary between the coupling element 20 and the stem portion 18 there is provided a raised tab 28 which has a function to prevent the fastening tool such as pliers or pincers from slipping off when the clip is closed for the clamping purpose. On the boundary between the arm portion 14 and the stem portion 18 there may be provided two or more ribs 30 for reinforcement as well as retention of the boundary portion.

In Figure 2 the linking loop 32 for use with the strip members 12, 12 is shown comprising an annular frame 34, bridge members 36, 36 extending across the annular frame 34 and outwardly extending symmetrical protuberances 38, 38. In the embodiment of Figure 3, the linking loop 32 is placed inside a base plate 44. Between the bridge members 36, 36 and the annular frame 34 there are formed two confronting semi-circular spaces 40, 40 into which the base tongues 16, 16 of the strip members 12, 12 are inserted for engagement therewith as shown in Figures 3 and 4 which also show a pipe 42 firmly clamped by the mounting clip 10 in relation to the base plate 44.

Figure 4 is concerned with another embodiment of the invention in which the locking lugs 24, 24 project outwardly and the linking loop 32 is placed outside the base plate 44.

The inwardly projecting locking lugs 24, 24 as shown in Figure 3 have the advantage that any risk of injuring the operator's hands or fingers or damaging other constructional objects such as pipes or wires may positively be avoided.

As hereinbefore fully described the tongues 16, 16 of the strip members 12, 12 are previously associated with the linking loop 32 for convenient, smooth and rapid engaging operation of the mounting clip 10 with the base structure 44 with increased working efficiency particularly when the clip is fixed overhead.

Furthermore, the clip 10 including two separate strips of the same configuration and structure is suitable for mass production and each strip can be associated with the linking loop 32 in both of its semi-circular spaces 40.

## Claims

1. A mounting clip (10) including two wriggly strip members (12) of substantially the same structure and configuration, which member comprises an arm portion (14) having at its one end a base tongue (16) adapted to be engaged with a base structure (44) and at its opposite end a stem portion (18) contiguous with a coupling element (20) comprising a detention bore (22) and an externally projecting locking lug (24) located at the edge of the detention bore (22) and arranged to engage with the detention bore (22) in the coupling element (20) of the other strip member (12) for interlocking of the two strips, characterized by the provision of a linking loop (32) comprising an annular frame (34), bridge members (36) extending across the annular frame (34) and outwardly extending symmetrical protuberances (38), arranged on said annular frame (34) at the ends of said bridge members (36), said linking loop (32) receiving and holding the strip members (12) adjacent to the supporting structure (44).

2. A mounting clip according to claim 1, characterized in that between the bridge members (36) and the annular frame (34) there are formed two confronting semi-circular spaces (40) into which the ends of the strip members (12) are inserted for engagement therewith.

## Patentansprüche

1. Schelle (10) zum Befestigen von Rohren o.dgl. an einer Tragkonstruktion, mit zwei im wesentlichen gleich ausgebildeten, schlangenförmig gekrümmten, streifenförmigen Teilen (12), die jeweils einen Armabschnitt (14) aufweisen, der an seinem einen Ende eine Basiszunge (16) besitzt, die mit der Tragkonstruktion (44) in Eingriff zu bringen ist, und der an seinem anderen Ende einen Stegabschnitt (18) besitzt, der einem Kupplungselement (20) benachbart ist, welches eine Arretieröffnung (22) sowie eine nach außen vorstehende Verriegelungszunge (24) aufweist, die am Rand der Arretieröffnung (22) angeordnet ist und zwecks Verriegelung der beiden streifenförmigen Teile (12) mit der Arretieröffnung (22) des anderen streifenförmigen Teils (12) in Eingriff zu bringen ist, gekennzeichnet durch einen Verbindungsbügel (32), der einen ringförmigen Rahmen (34), sich quer zu dem Rahmen (34) erstreckende Traversen (36) sowie sich nach außen erstreckende symmetrische Vorsprünge (38) aufweist, die an dem ringförmigen Rahmen (34) an den Enden der Traversen (36) angeordnet sind, wobei der Verbindungsbügel (32) die streifenförmigen Teile (12) benachbart zu der Stützkonstruktion (44) aufnimmt und hält.

2. Schelle nach Anspruch 1, dadurch gekennzeichnet, daß zwischen den Traversen (36) und dem ringförmigen Rahmen (34) zwei einander gegenüberliegende halbkreisförmige Räume (40) vorhanden sind, in welche die Enden der streifenförmigen Teile (12) zwecks Verbindung mit dem Verbindungsbügel (32) eingeführt sind.

## Revendications

1. Griffe de montage (10) comprenant deux éléments (12) en forme de lame de configuration complexe, ayant sensiblement la même structure et la même configuration, chaque élément en forme de lame comprenant un bras (14) ayant à l'une de ses extrémités une languette de base (16) conçue pour s'engager sur une structure de base (44), et à son autre extrémité une tige (18) contiguë à un élément d'accouplement (20) comprenant un alésage de détention (22) et une patte de verrouillage (24) faisant saillie vers l'extérieur, placée sur le bord de l'alésage de détention (22) et conçue pour s'engager dans l'alésage de détention (22) de l'élément d'accouplement (20) de l'autre élément (12) en forme de lame pour interverrouiller les deux lames,

caractérisée en ce qu'il est prévu une boucle de liaison (32) comprenant un cadre annulaire (34) et des éléments de liaison (36) reliant deux points diamétralement opposés du cadre annulaire (34), et des protubérances symétriques (38) faisant saillie vers l'extérieur et disposées sur ledit cadre annulaire (34) aux extrémités desdits éléments de liaison (36), ladite boucle de liaison (32) recevant et maintenant les éléments en forme de lame (12) près de la structure de support (44).

2. Griffe de montage selon la revendication 1, caractérisée en ce que, entre les éléments de liaison (36) et le cadre annulaire (34), il est formé deux espaces (40) en forme de demi-cercle se faisant face, dans lesquels on insère les extrémités des éléments en forme de lame (12) pour qu'elles s'y engagent.

FIG.1

30  22  20  26  20
12  24  26  22  24  28
16  14  30 18
16  12  14

FIG.2

32
36  38
40  36
38  36
34
40

FIG.3

FIG.4

24  24
24  24
10
42  42  32
10
16
44  16  16  44
16  16  32
16  16